# EUROPEAN PATENT APPLICATION

(11) **EP 4 571 219 A1**
(43) Date of publication of application: **18.06.2025**
(21) Application number: 24184837.3
(22) Date of filing: 27.06.2024
(51) Int. Cl.: F25D 3/11, F25D 31/00

(54) **SYSTEM AND METHOD FOR CRYOGENIC THERMAL CONDITIONING OF COLD CHAIN PHASE CHANGE MATERIAL PANELS**

(30) Priority: 12.12.2023 US 202363609039 P
(71) Applicant: Peli Biothermal LLC, Maple Grove, Minnesota 55369 (US)
(72) Inventor: Goellner, Kai, St. Paul (US)
(74) Representative: Vossius & Partner Patentanwälte Rechtsanwälte mbB

(57) **Abstract**

A spiral conveyor cryogenic freezer for thermal conditioning of cold chain phase change material panels and associated method of expedited ready-for-use thermal conditioning of thermally-spent cold chain phase change material panels. A two-stage inline system for thermal conditioning of cold chain phase change material panels that includes the spiral conveyor cryogenic freezer and a spiral conveyor thermal tempering unit and associated method of expedited ready-for-use thermal conditioning of thermally-spent cold chain phase change material panels. A redundant two-stage inline system for thermal conditioning of cold chain phase change material panels that includes a pair of units each capable of independently cryogenically freezing and thermal tempering of cold chain phase change material panels and associated method of expedited ready-for-use thermal conditioning of thermally-spent cold chain phase change material panels.

## Description

### BACKGROUND

Thermal conditioning of phase change material panels (PCM panels) used in cold chain shipment of thermally labile payloads from a thermally spent condition to a thermally ready-to-use condition (*i.e.,* frozen and thermally tempered to a temperature within the acceptable temperature range for the particular payload when the container is expected to experience external temperatures during shipment above the acceptable temperature range, and thawed and thermally tempered to a temperature within the acceptable temperature range for the particular payload when the container is expected to experience external temperatures during shipment below the acceptable temperature range) is a time consuming process that typically requires a day or more. This places a significant burden upon cold chain shippers who need to provide several days advance notice when they require a cold chain shipping container.

Hence, a significant need exists for a system and process that permits expedited thermal conditioning of thermally-spent phase change material panels into ready-to-use thermally tempered panels.

### BRIEF DESCRIPTION OF THE DRAWINGS

Figure 1 is a schematic top view of one embodiment of the cryogenic freezer aspect of the invention.
Figure 2 is a schematic top view of one embodiment of the two-stage inline cryogenic thermal conditioning system aspect of the invention.
Figure 2A is an enlarged view of the first stage portion of the two-stage inline cryogenic thermal conditioning system depicted in Figure 2.
Figure 2B is an enlarged view of the second stage portion of the two-stage inline cryogenic thermal conditioning system depicted in Figure 2.
Figure 3 is a flow diagram for exemplary temperature settings for the first and second thermal conditioning chambers to thermally condition phase change material panels containing different phase change materials for use in maintaining a cold chain shipping container at a temperature colder or warmer than anticipated environmental temperatures to be experienced by the container during shipment.

### SUMMARY OF THE INVENTION

A first aspect of the invention is a cryogenic freezer for thermal conditioning of cold chain phase change material panels. A second aspect of the invention is a two-stage inline system for thermal conditioning of cold chain phase change material panels. A third aspect of the invention is a redundant two-stage inline system for thermal conditioning of cold chain phase change material panels. A fourth aspect of the invention is a method of expedited ready-for-use thermal conditioning of thermally-spent cold chain phase change material panels.

A particular embodiment of a cryogenic freezer in accordance with the first aspect of the invention includes an enclosure defining a thermal conditioning chamber, a driven conveyor system, two sets of spray nozzles for injecting a controlled quantity of a cryogenic fluid into the thermal conditioning chamber, and a controller for independently controlling the amount of cryogenic fluid sprayed through each of the first and second sets of spray nozzles.

The driven conveyor system is operable for continuously transporting phase change material panels through the thermal conditioning chamber and includes (1) an upstream platform length external to the thermal conditioning chamber for carrying thermally spent phase change material panels into the thermal conditioning chamber, (2) an intermediate platform length in the thermal conditioning chamber for providing a dwell time operable for transitioning thermally spent phase change material panels carried by the upstream length into the thermal conditioning chamber to deep frozen phase change material panels, and (3) a downstream platform length external to the thermal conditioning chamber for transporting deep frozen phase change material panels out from the thermal conditioning chamber.

The first set of the spray nozzles is one or more nozzles spatially configured and arranged relative to the intermediate platform length for emitting a flow of cryogenic fluid for direct contact with select phase change material panels carried on the intermediate platform length to expedite thermal conditioning of the select phase change material panels. The second set of spray nozzles is one or more nozzles spatially configured and arranged relative to the intermediate platform length for emitting a flow of cryogenic fluid into the thermal conditioning chamber for distribution throughout the thermal conditioning chamber for controlling the environmental temperature within the thermal conditioning chamber so as to holistically thermally condition a supply of phase change material panels carried on the intermediate platform length.

The controller is operable for independently controlling spray of cryogenic fluid through each of the first and second nozzles.

A particular embodiment of a two-stage inline system for thermal conditioning of cold chain phase change material panels in accordance with the second aspect of the invention includes first and second enclosures each defining a thermal conditioning chamber, first and second temperature control systems for controlling the temperature within the first and second thermal conditioning chambers respectively, and a driven conveyor system.

The first and second temperature control system each include (i) spray nozzles for introducing a cryogenic fluid from a source of cryogenic fluid into the thermal conditioning chamber, and (ii) a controller for controlling the quantity of cryogenic fluid sprayed into the thermal conditioning chamber to achieve and maintain a desired temperature within the thermal conditioning chamber.

The driven conveyor system is configured and arranged for continuously transporting phase change material panels from a conveyor loading position through the first and second enclosures and then to a conveyor unloading position.

A second embodiment of a two-stage inline system for thermal conditioning of cold chain phase change material panels in accordance with the second aspect of the invention includes first and second enclosures each defining a thermal conditioning chamber, first and second temperature control systems for controlling the temperature within the first and second thermal conditioning chambers respectively, and a driven conveyor system.

The first temperature control system includes (i) spray nozzles for introducing a cryogenic fluid from a source of cryogenic fluid into the first thermal conditioning chamber, and (ii) a controller for controlling the quantity of cryogenic fluid sprayed into the first thermal conditioning chamber to achieve and maintain a desired temperature within the thermal conditioning chamber.

The second temperature control system includes (i) a heat source for introducing heat into the second thermal conditioning chamber, and (ii) a controller for controlling the introduction of heat into the second thermal conditioning chamber to achieve and maintain a desired temperature within the second thermal conditioning chamber.

The driven conveyor system is configured and arranged for selectively and continuously transporting phase change material panels from a conveyor loading position to a selected conveyor unloading position along one of three available paths selected from (i) a primary path through both the first and second enclosures to a primary conveyor unloading position, (ii) a secondary path through only the first thermal conditioning chamber to a secondary conveyor unloading position, and (iii) a tertiary path through only the second thermal conditioning chamber to a tertiary conveyor unloading position. The driven conveyor system includes (1) an upstream platform length external to the first and second thermal conditioning chambers for carrying phase change material panels in need of thermal conditioning from the conveyor loading position along one of the three paths, (2) a first intermediate platform length in the first thermal conditioning chamber for providing a dwell time operable for thermally transitioning the phase change material within phase change material panels carried by the upstream length into the first thermal conditioning chamber from a first thermal state to a second thermal state, (3) a second intermediate platform length in the second thermal conditioning chamber for providing a dwell time operable for thermally transitioning the phase change material within phase change material panels carried by the driven conveyor system into the second thermal conditioning chamber from a first thermal state to a second thermal state, (4) a first diversion platform length external to the first and second thermal conditioning chambers for transporting phase change material panels exiting the first thermal conditioning chamber to a secondary conveyor unloading position, and (5) a second diversion platform length external to the first and second thermal conditioning chamber for transporting phase change material panels from the conveyor loading position into the second thermal conditioning chamber with bypass of the first thermal conditioning chamber.

A particular embodiment of a redundant two-stage inline system for thermal conditioning of cold chain phase change material panels in accordance with the third aspect of the invention includes first and second enclosures each defining a thermal conditioning chamber, first and second temperature control systems for controlling the temperature within the first and second thermal conditioning chambers respectively, and a driven conveyor system.

The first and second temperature control systems each include (1) spray nozzles for introducing a cryogenic fluid from a source of cryogenic fluid into the thermal conditioning chamber, (2) a heat source for introducing heat into the thermal conditioning chamber, and (3) a controller for controlling the quantity of cryogenic fluid sprayed into the thermal conditioning chamber and controlling the introduction of heat into the thermal conditioning chamber to achieve and maintain a desired temperature within the thermal conditioning chamber.

The driven conveyor system transports phase change material panels from a conveyor loading position to a conveyor unloading position through the first and second enclosures.

A particular embodiment of the driven conveyor system is configured and arranged for continuously and selectively transporting phase change material panels from a conveyor loading position to a selected conveyor unloading position along one of three available paths selected from (i) a primary path through both the first and second enclosures to a primary conveyor unloading position, (ii) a secondary path through only the first thermal conditioning chamber to a secondary conveyor unloading position, and (iii) a tertiary path through only the second thermal conditioning chamber to a tertiary conveyor unloading position.

A particular embodiment of a method of expedited ready-for-use thermal conditioning of thermally-spent cold chain phase change material panels in accordance with the fourth aspect of the invention includes the steps of (i) conveying the thermally-spent cold chain phase change material panels into a first thermal conditioning chamber cooled by a spray of a cryogenic fluid into the first thermal conditioning chamber, (ii) maintaining the thermally-spent cold chain phase change material panels within the first thermal conditioning chamber for a dwell time sufficient to thermally transition the thermally-spent cold chain phase change material panels to deep-frozen phase change material panels, (iii) conveying the deep-frozen phase change material panels into a second thermal conditioning chamber warmed by a heat source, and (iv) maintaining the deep-frozen phase change material panels within the second thermal conditioning chamber for a dwell time sufficient to thermally transition the deep-frozen phase change material panels to thermally-tempered phase change material panels.

### DETAILED DESCRIPTION OF THE INVENTION

### INCLUDING A PREFERRED EMBODIMENT

### Definitions

As utilized herein, the phrase **"*deep-frozen*"** means frozen phase change material having a temperature more than 5° C below the melt temperature of the phase change material. By analogy, the phrase ***"deep-frozen phase change material panels"*** means phase change material panels containing frozen phase change material having a temperature more than 5° C below the melt temperature of the phase change material within the panel.

As utilized herein, the phrase ***"thermally tempered"*** means (1) as to phase change material for use in maintaining a payload chamber below anticipated environmentally experienced temperatures, frozen phase change material having a temperature no more than 5° C below the melt temperature of the phase change material, and (2) as to phase change material for use in maintaining a payload chamber above anticipated environmentally experienced temperatures, liquid phase change material having a temperature no more than 5° C above the freeze temperature of the phase change material. By analogy, the phrase ***"thermally tempered phase change material panels"*** means phase change material panels containing frozen phase change material having a temperature no more than 5° C below the melt temperature of the phase change material within the panel, or phase change material panels containing liquid phase change material having a temperature no more than 5° C above the freeze temperature of the phase change material within the panel.

As utilized herein, the phrase ***"thermally spent",*** when used in connection with a cold chain phase change material panel, means an appreciable or complete phase change from a solid to a liquid when cooling is desired or from a liquid to a solid when warming is desired.

**Nomenclature Table**

| **REF. No.** | **DESCRIPTION** |
|---|---|
| 10 | Cryogenic Freezer |
| 100 | Enclosure |
| 109 | Thermal Conditioning Chamber |
| 110 | Temperature Control System |
| 112 | Cryogen Spray Nozzles |
| 112₁ | First Direct Contact Cryogen Spray Nozzles |
| 112₂ | Second Environmental Cryogen Spray Nozzles |
| 116 | Controller for Temperature Control System |
| 120 | Conveyor |
| 120a | Upstream Platform Length |
| 120b | Intermediate Platform Length |
| 120c | Downstream Platform Length |
| 200ₙ | Two-Stage Inline Thermal Conditioning System |
| 200₁ | First Stage (Enclosure) |
| 200₂ | Second Stage (Enclosure) |
| 209ₙ | n^{th} Thermal Conditioning Chamber |
| 209₁ | First Thermal Conditioning Chamber |
| 209₂ | Second Thermal Conditioning Chamber |
| 210ₙ | Temperature Control System n |
| 210₁ | Temperature Control System for First Thermal Conditioning Chamber |
| 212₁ | Cryogen Spray Nozzles in First Thermal Conditioning Chamber |
| 214₁ | Heat Source in Thermal Communication with First Thermal Conditioning Chamber |
| 216₁ | Controller for Temperature Control System for First Thermal Conditioning Chamber |
| 210₂ | Temperature Control System for First Thermal Conditioning Chamber |
| 212₂ | Cryogen Spray Nozzles in Second Thermal Conditioning Chamber |
| 214₂ | Heat Source in Thermal Communication with Second Thermal Conditioning Chamber |
| 216₂ | Controller for Temperature Control System for Second Thermal Conditioning Chamber |
| 220 | Conveyor |
| 220a | Upstream Platform Length |
| 220b, | n^{th} Intermediate Platform Length |
| 220b₁ | First Intermediate Platform Length |
| 220b₂ | Second Intermediate Platform Length |
| 220c | Final Downstream Platform Length |
| 220dₙ | n^{th} Diversion Platform Length |
| 220d₁ | First Diversion Platform Length |
| 220d₂ | Second Diversion Platform Length |
| 230a | Conveyor Loading Position |
| 230bₙ | Conveyor Unloading Position n |
| 230b₁ | Primary Conveyor Unloading Position |
| 230b₂ | Secondary Conveyor Unloading Position |
| 230b₃ | Tertiary Conveyor Unloading Position |
| 300 | Cold Chain Phase Change Material Panels |
| 300₀ | Cold Chain Phase Change Material Panels in Need of Thermal Conditioning such as Thermally Spent Phase Change Material Panels |
| 300₁ | Deep-Frozen Cold Chain Phase Change Material Panels |
| 300₂ | Thermally Tempered Cold Chain Phase Change Material Panels |

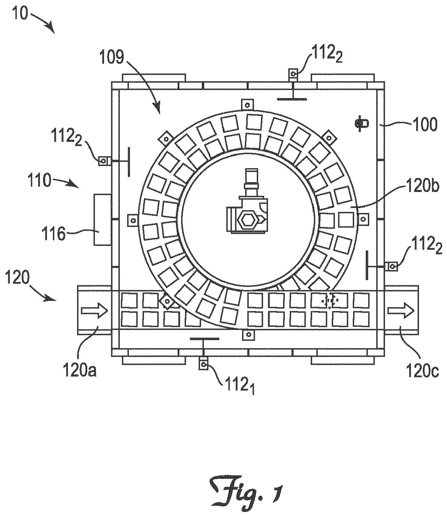

Referring to Figure 1, a first aspect of the invention is a cryogenic freezer **10** for thermal conditioning of cold chain phase change material panels **300.** A preferred cryogen is liquid nitrogen (LN₂).

Referring to Figure 1, the cryogenic freezer **10** includes an enclosure **100** defining a thermal conditioning chamber **109** and a conveyor **120** having (i) an upstream platform length **120a** for feeding phase change material panels **300** into the thermal conditioning chamber **109,** (ii) an intermediate platform length **120b** for providing a dwell time operable for transitioning thermally spent phase change material panels **300₀** carried by the upstream length **120a** into the thermal conditioning chamber **109** to deep frozen phase change material panels **300₂**, and (iii) a downstream platform length **120c** for conveying deep frozen phase change material panels **300₂** out from the thermal conditioning chamber **109.**

The intermediate platform length **120b** is preferably a spiral conveyor **120,** such as depicted in Figure 1, as they reduce capital cost and square-footage footprint requirements for the enclosure **100.**

The LN₂ can be sprayed into the thermal conditioning chamber **109** defined by an enclosure **100** using spray nozzles **112** distributed throughout the thermal conditioning chamber **109** and connected to a supply of LN₂ (not shown) via a manifold (not shown) with at least two branches (not shown). The manifold includes two valved branches, with each valve controlled by a temperature control system **110.** The first branch is controlled by a first valve (not shown) in fluid communication with a first set of one or more spray nozzles **112₁** that spray LN₂ directly onto the PCM panels **300** on the conveyor **120** ("direct injection") and a second branch controlled by a second valve (not shown) in fluid communication with a second set of one or more spray nozzles **112₂** that spray LN₂ into the holistic environment of the thermal conditioning chamber **109** (*e.g*., sprays LN₂ into the airstream of one or more fans (not shown) positioned on the perimeter of the thermal conditioning chamber **109** to provide cyclonic airflow within the environment) ("indirect injection"). Ideally, these fans are configured and arranged to provide a cyclonic airflow within the environment that flow counter to the direction of conveyance to maximize convective heat transfer on the PCM panels **300.**

A controller **116,** such as a proportional-integral-derivative (PID) controller, controls the amount of LN₂ injected into the thermal conditioning chamber **109** to control the environment temperature within the thermal conditioning chamber **109** at a specific setpoint. To ensure proper thermal conditioning of each and every PCM panel **300** it is imperative that the directly injected LN₂ (*i.e.,* the LN₂ sprayed directly into contact with the PCM panels **300** on the conveyor **120)** operates at a constant injection rate, while the indirectly injected LN₂ (*i.e.,* the LN₂ sprayed into the environment of the thermal conditioning chamber **109)** operates at a variable injection rate as necessary to maintain the overall environmental temperature of the thermal conditioning chamber **109** at a previously established setpoint. The amount of directly injected LN₂ is selected below the total calculated heat load required to achieve and maintain the overall environmental temperature of the thermal conditioning chamber **109** at the previously established setpoint (*e.g*., 1%) to ensure that runaway low temperatures do not occur as is possible since the amount of LN₂ directly injected is constant and independent of the environmental temperature within the thermal conditioning chamber **109.** This allows the temperature dependent indirect injection valve to control the environmental temperature within the thermal conditioning chamber **109.**

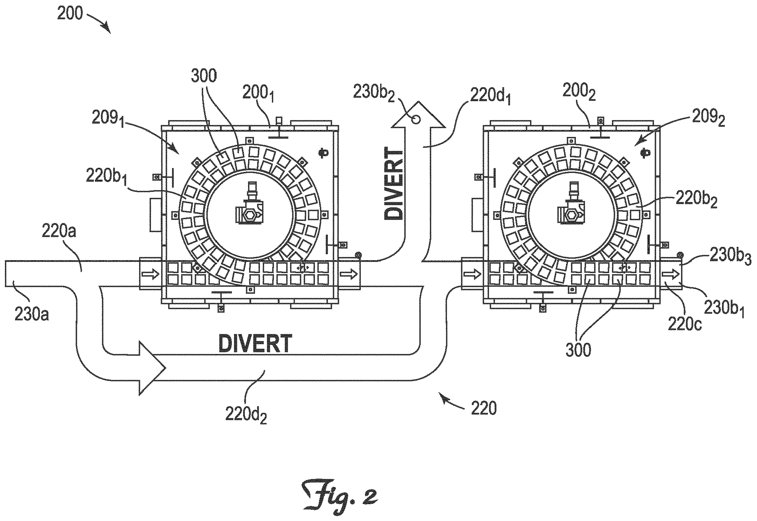

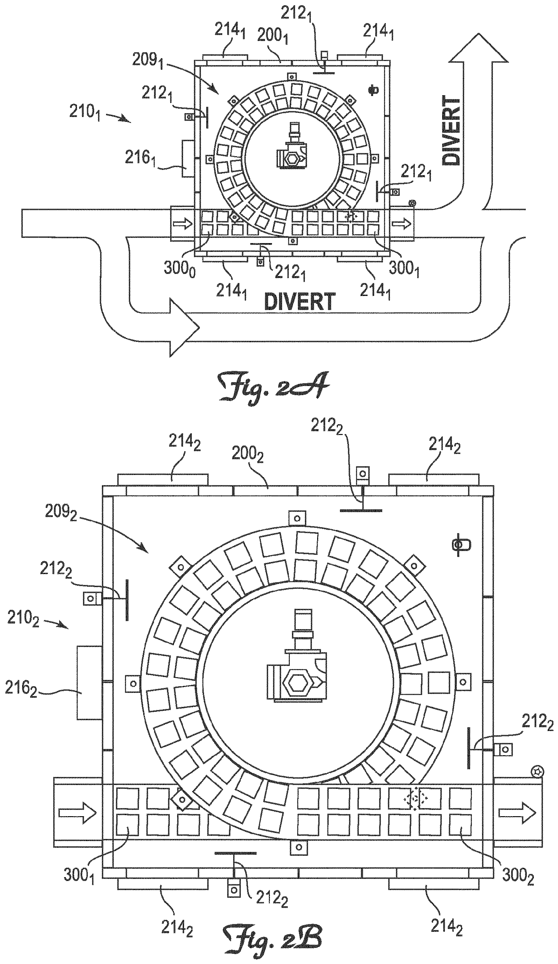

Referring to Figures 2, 2A and 2B, a second aspect of the invention is a continuous flow multi-stage inline conveyance system **200ₙ** for rapidly thermally conditioning phase change material panels (PCMs) **300** for use in passive temperature-controlled shipping solutions. The conveyance system **200ₙ** includes (i) multiple stages or enclosures **200ₙ** each defining a thermal conditioning chamber **209ₙ**, (ii) a temperature control system **210** for separately controlling the temperature within each enclosure **200ₙ**, and (iii) a conveyor **220** for transporting phase change material panels **300** through a selected set of the enclosures **200ₙ** to a final unloading position **230bₙ**. When the multi-stage inline conveyance system **200ₙ** is a two-stage system **200ₙ**, the system **200ₙ** conveys PCMs **300** through two separate enclosures **200₁** and **200₂** each having a thermal conditioning chamber **209₁** and **209₂** respectively, defining environments controlled at different temperature setpoints. A cryogenic fluid such as liquid nitrogen (LN₂) can be used to cool each environment to temperatures as low as -87°C. A modified version of the cryogenic freezer **10** of the first aspect of the invention is suitable for use as each of the enclosures **200₁** and **200₂**.

The environments of each of the enclosures **200₁** and **200₂** can also be outfitted with heating elements **214₁** and **214₂** respectively, preferably elements capable of warming the environments up to +60°C. Controllers **216₁** and **216₂** can control both LN₂ injection and operation of the heating elements **214₁** and **214₂** on each of the enclosures **200₁** and **200₂** respectively, to attain and maintain a set environmental temperature within the respective thermal conditioning chambers **209₁** and **209₂**.

The driven conveyor system **220** includes (i) an upstream platform length **220a** external to a first of the thermal conditioning chambers **209₁** in sequence, for carrying phase change material panels **300₀** in need of thermal conditioning from the conveyor loading position **230a** along one of several paths, (ii) intermediate platform lengths **220bₙ**, each providing a dwell time in one of the thermal conditioning chambers **209ₙ** for thermally transitioning a phase change material panel **300,** (iii) a final downstream platform length **220c** for conveying fully thermally conditioned phase change material panels **300** out from the last of the thermal conditioning chambers **209ₙ** in sequence, and optionally (iv) one or more diversion platform lengths **220dₙ**, each allowing diversion of thermally transitioned phase change material panels **300** exiting one of the thermally conditioning chambers **209ₙ** from a primary path to a diversion path that bypasses one or more of the stages or enclosures **200ₙ**.

When the multi-stage inline conveyance system **200ₙ** is a two-stage system **200ₙ**, the conveyor system **220ₙ** includes (i) a first intermediate platform length **220b₁** in the first thermal conditioning chamber **209₁** for providing a dwell time operable for thermally transitioning the phase change material within phase change material panels **300** carried by the upstream length **220a** into the first thermal conditioning chamber **209₁** from a first thermal state to a second thermal state, (ii) a second intermediate platform length **220b₂** in the second thermal conditioning chamber **209₂** for providing a dwell time operable for thermally transitioning the phase change material within phase change material panels **300** carried by the driven conveyor system **200ₙ** into the second thermal conditioning chamber **209₂** from a first thermal state to a second thermal state and optionally (iii) diversion platform lengths **220dₙ** including one or both of (A) a first diversion platform length **220d₁** external to the first and second thermal conditioning chambers **209₁** and **209₂** for transporting phase change material panels **300** exiting the first thermal conditioning chamber **209₁** to a secondary conveyor unloading position **230b₂**, and (B) a second diversion platform length **220d₂** external to the first and second thermal conditioning chambers **209₁** and **209₂** for transporting phase change material panels **300** from the conveyor loading position **230a** directly into the second thermal conditioning chamber **209₂** with bypass of the first thermal conditioning chamber **209₁** to a tertiary conveyor unloading position **230b₃**.

Spiral conveyors **220,** such as depicted in Figures 2, 2A and 2B, are the preferred type of conveyor **220** as they reduce capital cost and square-footage footprint requirements for the system **200ₙ**.

By equipping each stage **200ₙ** (*i.e.,* **200₁** and **200₂** for a two-stage system) of the system **200ₙ** with a temperature control system **210ₙ** (*i.e.,* **210₁** and **210₂** for a two-stage system) that include both spray nozzles **212₁** and **212₂** for spraying a cryogenic fluid into the thermal conditioning chamber **209₁** and **209₂** respectively, and with heating elements **214₁** and **214₂** for warming the thermal conditioning chamber **209₁** and **209₂** respectively, the system **200ₙ** becomes a redundant system **200ₙ** whereby either of the stages **200₁** and **200₂** can be used for both deep freeze and thermal tempering of PCM panels **300** should one of the stages **200₁** and **200₂** suffer a mechanical failure. If, for example, the second unit **200₂** is unavailable, deep-frozen PCM panels **300₁** exiting the first unit **200₁** may be diverted to a temperature-controlled storage (not shown). Upon batch completion of deep-frozen PCM panels **300₁**, the deep-freeze environment of the first unit **200₁** can be converted into a thermal tempering environment and the stored deep-frozen PCM panels **300₁** run through the first unit **200₁** again to thermally transition the deep-frozen PCM panels **300₁** to thermally tempered ready-to-use PCM panels **300₂**. This works *mutatus mutandis* when the first unit **200₁** is unavailable and the second unit **200₂** must be used for both thermal conditioning stages.

The two stage system **200ₙ** is flexible for handling a variety of different temperature conditioning requirements, including specifically but not exclusively the following examples of PCMs with unique freeze points.

| **SERIES DESIGNATION** | **COLD CHAIN CONTAINER USE** | **THERMAL READY-TO-USE PARAMETERS** |
|---|---|---|
| Series 20M | Frozen Control of Payload and Payload Chamber | Must be Completely Frozen below -22°C |
| Series 4 | Refrigerated Control of Payload and Payload Chamber Between 2°-8°C | Must be Completely Frozen Below 5°C But May Not Subject Payload to Temperatures Below 2°C |
| Series 22(s) | Summer ( 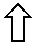 Ambient Temperature) Room Temperature Control of Payload and Payload Chamber Between 15°-25°C | Must be Completely Frozen But May Not Subject Payload to Temperatures Below 15°C |
| Series 22(w) | Winter ( 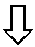 Ambient Temperature) Room Temperature Control of Payload and Payload Chamber Between 15°-25°C | Must be Completely Melted But May Not Subject Payload to Temperatures Above 25°C |

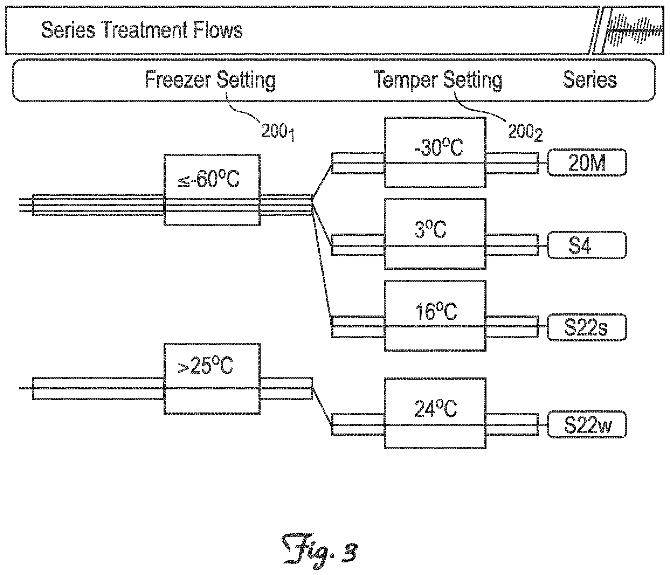

Figure 3 shows exemplary acceptable temperature settings for each of the two thermal conditioning stages (enclosures) **200₁** and **200₂** in the system **200ₙ** to achieve phase change material panels **300** of each of the series set forth above in a ready-to-use thermal state.

Upon exit from the second stage unit **200₂**, thermally tempered ready-to-use PCM panels **300₂** continue to an unloading position **230b₁** where they can be installed into position within a thermally insulated shipping container (not shown). Upon completion of the install the now passive thermally controlled shipping container is immediately ready to receive a thermally labile temperature-sensitive payload (not shown) such as blood, organs, or pharmaceuticals for shipment.

Many such thermally insulated shipping containers require multiple sizes of thermally conditioned PCM panels **300₂**. The two stage system **200ₙ** can properly thermally condition an intermingled set of differently sized PCM panels **300** whereby a full set of intermingled PCM panels **300** necessary to complete a given thermally insulated shipping container can be processed together.

## Claims

1. A two-stage inline system for thermal conditioning of cold chain phase change material panels containing a phase change material having a melt temperature, comprising:
(a) a first enclosure defining a first thermal conditioning chamber,
(b) a second enclosure defining a second thermal conditioning chamber,
(c) a first temperature control system for controlling the temperature within the first thermal conditioning chamber, comprising:
(i) spray nozzles for introducing a cryogenic fluid from a source of cryogenic fluid into the first thermal conditioning chamber, and
(ii) a controller for controlling the quantity of cryogenic fluid sprayed into the first thermal conditioning chamber to achieve and maintain a desired temperature within the first thermal conditioning chamber,
(d) a second temperature control system for controlling the temperature within the second thermal conditioning chamber, comprising:
(i) a heat source for introducing heat into the second thermal conditioning chamber, and
(ii) a controller for controlling the introduction of heat into the second thermal conditioning chamber to achieve and maintain a desired temperature within the second thermal conditioning chamber, and
(e) a driven conveyor system for continuously transporting phase change material panels from a conveyor loading position through the first and second enclosures and then to a conveyor unloading position.

2. A cryogenic freezer for thermal conditioning of cold chain phase change material panels, comprising:
(a) an enclosure defining a thermal conditioning chamber,
(b) a driven conveyor system for continuously transporting phase change material panels through the thermal conditioning chamber, the conveyor system including:
(i) an upstream platform length external to the thermal conditioning chamber for carrying thermally spent phase change material panels into the thermal conditioning chamber,
(ii) an intermediate platform length in the thermal conditioning chamber for providing a dwell time operable for transitioning thermally spent phase change material panels carried by the upstream length into the thermal conditioning chamber to deep frozen phase change material panels, and
(iii) a downstream platform length external to the thermal conditioning chamber for transporting deep frozen phase change material panels out from the thermal conditioning chamber,
(c) spray nozzles for introducing a controlled quantity of a cryogenic fluid from a source of cryogenic fluid into the thermal conditioning chamber, wherein the spray nozzles include:
(i) one or more first nozzles spatially configured and arranged relative to the intermediate platform length for emitting a flow of cryogenic fluid for direct contact with select phase change material panels carried on the intermediate platform length to expedite thermal conditioning of the select phase change material panels, and
(ii) one or more second nozzles spatially configured and arranged relative to the intermediate platform length for emitting a flow of cryogenic fluid into the thermal conditioning chamber for distribution throughout the thermal conditioning chamber for controlling the environmental temperature within the thermal conditioning chamber so as to holistically thermally condition a supply of phase change material panels carried on the intermediate platform length, and
(d) a controller for independently controlling spray of cryogenic fluid through each of the first and second nozzles.

3. The two-stage inline system of claim 1 wherein the desired temperature within the first thermal conditioning chamber is a temperature effective for thermally conditioning phase change material panels conveyed through the first thermal conditioning chamber to deep-frozen phase change material panels.

4. The two-stage inline system of claim 1 wherein the desired temperature within the second thermal conditioning chamber is a temperature effective for thermally conditioning deep-frozen phase change material panels conveyed through the second thermal conditioning chamber to thermally tempered phase change material panels.

5. A two-stage inline system for thermal conditioning of cold chain phase change material panels containing a phase change material having a melt temperature, comprising:
(a) a first enclosure defining a first thermal conditioning chamber,
(b) a second enclosure defining a second thermal conditioning chamber,
(c) a first temperature control system for controlling the temperature within the first thermal conditioning chamber, comprising:
(i) spray nozzles for introducing a cryogenic fluid from a source of cryogenic fluid into the first thermal conditioning chamber, and
(ii) a controller for controlling the quantity of cryogenic fluid sprayed into the first thermal conditioning chamber to achieve and maintain a desired temperature within the first thermal conditioning chamber,
(d) a second temperature control system for controlling the temperature within the second thermal conditioning chamber, comprising:
(i) a heat source for introducing heat into the second thermal conditioning chamber, and
(ii) a controller for controlling the introduction of heat into the second thermal conditioning chamber to achieve and maintain a desired temperature within the second thermal conditioning chamber, and
(e) a driven conveyor system for continuously transporting phase change material panels from a conveyor loading position to a selected conveyor unloading position along one of three paths selected from (i) a primary path through both the first and second enclosures to a primary conveyor unloading position, (ii) a secondary path through only the first thermal conditioning chamber to a secondary conveyor unloading position, and (iii) a tertiary path through only the second thermal conditioning chamber to a tertiary conveyor unloading position, the driven conveyor system including:
(i) an upstream platform length external to the first and second thermal conditioning chambers for carrying phase change material panels in need of thermal conditioning from the conveyor loading position along one of the three paths,
(ii) a first intermediate platform length in the first thermal conditioning chamber for providing a dwell time operable for thermally transitioning the phase change material within phase change material panels carried by the upstream length into the first thermal conditioning chamber from a first thermal state to a second thermal state,
(iii) a second intermediate platform length in the second thermal conditioning chamber for providing a dwell time operable for thermally transitioning the phase change material within phase change material panels carried by the driven conveyor system into the second thermal conditioning chamber from a first thermal state to a second thermal state,
(iv) a first diversion platform length external to the first and second thermal conditioning chambers for transporting phase change material panels exiting the first thermal conditioning chamber to a secondary conveyor unloading position, and
(v) a second diversion platform length external to the first and second thermal conditioning chamber for transporting phase change material panels from the conveyor loading position into the second thermal conditioning chamber with bypass of the first thermal conditioning chamber.

6. A redundant two-stage inline system for thermal conditioning of cold chain phase change material panels containing a phase change material having a melt temperature, comprising:
(a) a first enclosure defining a first thermal conditioning chamber,
(b) a second enclosure defining a second thermal conditioning chamber,
(c) a first temperature control system for controlling the temperature within the first thermal conditioning chamber, comprising:
(i) spray nozzles for introducing a cryogenic fluid from a source of cryogenic fluid into the first thermal conditioning chamber,
(ii) a heat source for introducing heat into the first thermal conditioning chamber, and
(iii) a controller for controlling the quantity of cryogenic fluid sprayed into the first thermal conditioning chamber and controlling the introduction of heat into the first thermal conditioning chamber to achieve and maintain a desired temperature within the first thermal conditioning chamber,
(d) a second temperature control system for controlling the temperature within the second thermal conditioning chamber, comprising:
(i) spray nozzles for introducing a cryogenic fluid from a source of cryogenic fluid into the second thermal conditioning chamber,
(ii) a heat source for introducing heat into the second thermal conditioning chamber, and
(iii) a controller for controlling the quantity of cryogenic fluid sprayed into the second thermal conditioning chamber and controlling the introduction of heat into the second thermal conditioning chamber to achieve and maintain a desired temperature within the second thermal conditioning chamber,
(e) a driven conveyor system for transporting phase change material panels from a conveyor loading position to a conveyor unloading position through the first and second enclosures.

7. The two-stage inline system of claim 6 wherein the driven conveyor system is operable for selectively and continuously transporting phase change material panels from the conveyor loading position to the selected conveyor unloading position along one of three available paths selected from (i) a primary path through both the first and second enclosures to a primary conveyor unloading position, (ii) a secondary path through only the first thermal conditioning chamber to a secondary conveyor unloading position, and (iii) a tertiary path through only the second thermal conditioning chamber to a tertiary conveyor unloading position.

8. The two-stage inline system of claim 6 wherein the desired temperature within each of the first and second thermal conditioning chambers can be independently established at (i) a temperature effective for thermally conditioning phase change material panels conveyed through the thermal conditioning chamber to deep-frozen phase change material panels, or (ii) a temperature effective for thermally conditioning deep-frozen phase change material panels conveyed through the thermal conditioning chamber to thermally tempered phase change material panels.

9. A method of expedited ready-for-use thermal conditioning of thermally-spent cold chain phase change material panels containing a phase change material having a melt temperature, comprising:
(a) conveying the thermally-spent cold chain phase change material panels into a first thermal conditioning chamber cooled by a spray of a cryogenic fluid into the first thermal conditioning chamber,
(b) maintaining the thermally-spent cold chain phase change material panels within the first thermal conditioning chamber for a dwell time sufficient to thermally transition the thermally-spent cold chain phase change material panels to deep-frozen phase change material panels,
(c) conveying the deep-frozen phase change material panels into a second thermal conditioning chamber warmed by a heat source,
(d) maintaining the deep-frozen phase change material panels within the second thermal conditioning chamber for a dwell time sufficient to thermally transition the deep-frozen phase change material panels to thermally-tempered phase change material panels.

10. The method of claim 9 wherein the phase change material panels are continuously conveyed through both the first and second thermal conditioning chambers.

11. The method of claim 9 wherein the phase change material panels are continuously conveyed through both the first and second thermal conditioning chambers at the same speed.
